# EUROPÄISCHE PATENTSCHRIFT

(11) **EP 0 441 819 B1**
(45) Veröffentlichungstag und Bekanntmachung des Hinweises auf die Patenterteilung: **20.01.1993**
(21) Anmeldenummer: 89911993.7
(22) Anmeldetag: 11.10.1989
(51) Int. Cl.: A23G 9/30, F16L 55/10

(54) **VORRICHTUNG ZUM HERSTELLEN VON SPEISEEIS, MILCHSHAKE, SORBET, GEFRORENEN SÜSSSPEISEN U. DGL. JEWEILS AUS EINEM PUMPFÄHIGEN ANSATZ**
DEVICE FOR MAKING ICE CREAM, MILK SHAKES, SORBETS, FROZEN DESSERTS AND THE LIKE FROM A PUMPABLE INITIAL PREPARATION
DISPOSITIF POUR FABRIQUER DE CREMES GLACEES, DES MILK-SHAKES, DES SORBETS, DES DESSERTS GLACES ETC. A PARTIR D'UNE PREPARATION A POMPER

(30) Priorität: 05.11.1988 DE 3837604
(43) Veröffentlichungstag der Anmeldung: 21.08.1991
(73) Patentinhaber: LUMEN GmbH Nährmittel- und Maschinenfabrik, D-95326 Kulmbach (DE)
(72) Erfinder: MENZEL, Waldemar, D-8650 Kulmbach-Burghaig (DE)
(74) Vertreter: Rau, Manfred, Dr. Dipl.-Ing.
(86) Internationale Anmeldenummer: EP8901197
(87) Internationale Veröffentlichungsnummer: WO9004927

(56) Entgegenhaltungen:
- EP-A- 0 225 989
- DE-A- 1 525 867
- FR-A- 902 383
- FR-A- 2 477 669
- US-A- 3 559 423
- US-A- 3 857 255
- US-A- 4 309 875

## Beschreibung

Die Erfindung betrifft eine Vorrichtung nach dem Oberbegriff des Anspruches 1.

Bei einer derartigen, aus der DE-OS 35 44 802 (entsprechend US-PS 4 680 944) bekannten Vorrichtung ist zwischen dem dem Zapfventil benachbarten Endbereich des Kühl- oder Gefrier-Zylinders und dem Vorratsbehälter ein Verbindungskanal vorgesehen, wobei im Verbindungs-kanal ein Ventil angeordnet ist, um den Verbindungskanal absperren zu können. Hiermit wird erreicht, daß beim Pasteurisieren oder auch beim normalen Lagerbetrieb, bei dem der Eismix auf einer kurz oberhalb des Gefrierpunktes liegenden Lagertemperatur gehalten wird, der Eismix durch den Kühl- oder Gefrier-Zylinder, von dort zum Vorratsbehälter und zurück zum Zylinder umgepumpt werden kann. Hierdurch wird mit relativ einfachen Mitteln ein bakteriologisch gutes Ergebnis erzielt, wobei andererseits Geschmacksveränderungen des Eismixes beim Pasteurisieren vermieden werden, da ein Umwälzen des gesamten Inhalts des Kühl- oder Gefrier-Zylinders und des Vorratsbehälters beim Pasteurisieren ermöglicht wird. Das in den Verbindungskanal einzusetzende Ventil ist allerdings sehr aufwendig, wobei letzte Reste von bakteriologischen Verunreinigungen sich nicht mit Sicherheit ausschließen lassen.

Der Erfindung liegt daher die Aufgabe zugrunde, die Vorrichtung der gattungsgemäßen Art so weiterzubilden, daß mit einfachen Mitteln eine bakteriologisch einwandfreie Lösung für eine Absperrbarkeit des Verbindungskanals geschaffen wird.

Diese Aufgabe wird erfindungsgemäß durch die Merkmale im Kennzeichnungsteil des Anspruches 1 gelöst. Der Kern der Erfindung liegt also darin, daß während des normalen Betriebes, währenddessen Eisportionen entnommen werden, d.h. währenddessen der Verbindungskanal geschlossen sein soll, der in diesem befindliche Eismix gefroren wird. Es wird also mit den spezifischen Mitteln der Vorrichtung, nämlich dem ohnehin vorhandenen Kälteaggregat eine Verschlußmöglichkeit geschaffen. Wenn zum Pasteurisieren der Eismix-Pfropfen im Verbindungskanal aufgetaut werden soll, dann wird die Zufuhr von Kältemittel zu der Gefriereinrichtung abgeschaltet.

Weitere Merkmale, Vorteile und Einzelheiten der Erfindung ergeben sich aus den Unteransprüchen und der nachfolgenden Beschreibung von Ausführungsbeispielen anhand der Zeichnung. Es zeigt
Fig. 1 eine Vorrichtung gemäß der Erfindung in schematischer Darstellung im vertikalen Längsschnitt,
Fig. 2 einen Querschnitt gemäß der Schnittlinie II-II durch Fig. 1 und
Fig. 3 eine abgewandelte Ausführungsform der Erfindung in schematischer Darstellung im vertikalen Längsschnitt.

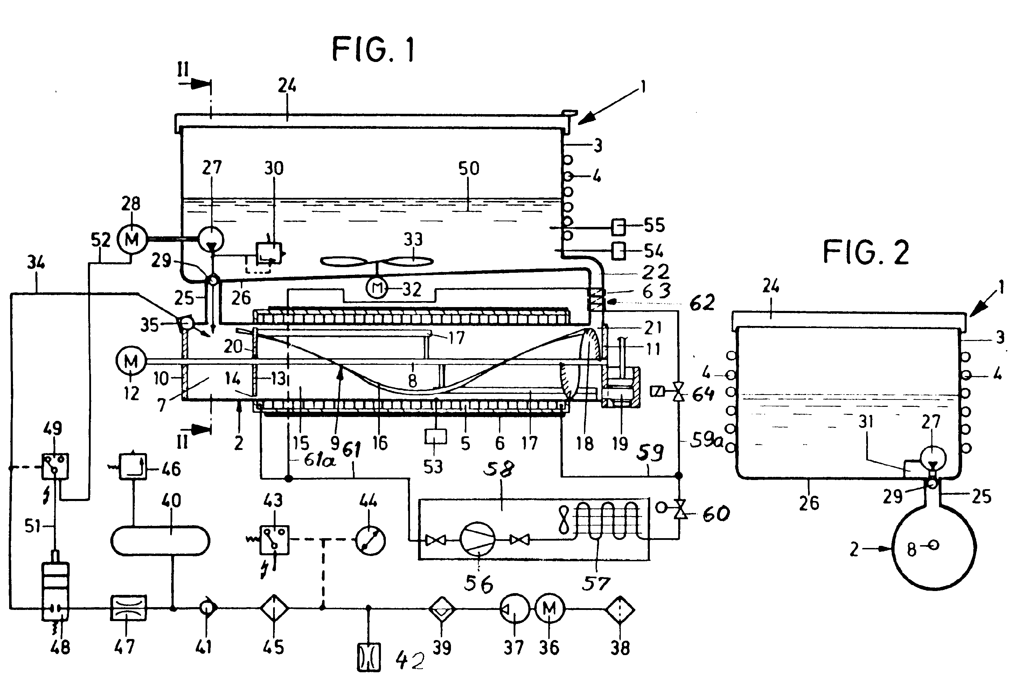

Wie aus den Fig. 1 und 2 hervorgeht, ist - in allgemein üblicher Weise - ein Vorratsbehälter 1 oberhalb eines horizontalen Kühl- oder Gefrier-Zylinders 2 angeordnet und bildet mit diesem weitgehend eine Einheit. Die Seitenwände 3 des Vorratsbehälters 1 sind mit einem Kühlrohr 4 versehen, das etwa schraubenförmig um die Seitenwände 3 verläuft und nur schematisch dargestellt ist.

Der Zylinder 2 ist mit einem Kühlmantel 5 umgeben, durch den ein Kältemittel gepumpt werden kann. Der Kühlmantel 5 selber ist wiederum von einem Heizmantel 6 umgeben. Kühlmantel 5 und Heizmantel 6 erstrecken sich weitgehend über die volle Länge des Zylinders 2 mit Ausnahme eines an einem - in Fig. 1 linken - Ende befindlichen Bereichs, in dem sich eine Einlaufkammer 7 des Zylinders 2 befindet.

Der Zylinder 2 wird koaxial von einer Welle 8 eines Rühr- und Schabewerks 9 durchsetzt, die in endseitigen Stirnwänden 10, 11 des Zylinders 2 drehbar gelagert und aus einem - in Fig. 1 linken - Ende herausgeführt ist. Das Rühr- und Schabewerk 9 wird auf dieser Seite von einem Elektro-Motor 12 angetrieben.

Auf der Welle 8 ist eine Scheibe 13 angebracht, die nur einen sehr schmalen Spalt 14 zur Wand des Zylinders 2 freiläßt. Diese Scheibe 13 trennt die Einlaufkammer 7 von der eigentlichen Kühl- und/oder Gefrier-Kammer 15 im Zylinder 2, die von dem Kühlmantel 5 und dem Heizmantel 6 umgeben ist. In der Kammer 15 ist auf der Welle 8 eine schraubenlinienförmige Rührwendel 16 befestigt. An der Welle 8 sind außerdem zwei an der Innenwand des Zylinders 2 anliegende Schabeklingen 17 angebracht, die ständig den Eisansatz von der Innenwand des Zylinders 2 abschaben. Im Anschluß an die Rührwendel 16 ist auf der Welle 8 noch eine kurzgängige Schnecke 18 mit einem Schneckengang befestigt, die eine gewisse Stauwirkung gegenüber der Rührwendel 16 ausübt. Vor der dem Motor 12 entgegengesetzten Stirnwand 11 ist ein Zapfventil 19 angebracht. In der eine Zwischenwand bildenden Scheibe 13 kann eine die Einlaufkammer 7 mit der Kammer 15 verbindende Durchlaßöffnung 20 ausgebildet sein.

Die Kühl- und/oder Gefrier-Kammer 15 ist in dem im Zapfventil 19 bzw. der zugeordneten Stirnwand 11 benachbarten Endbereich 21 über einen Verbindungskanal 22 mit dem Vorratsbehälter 1 verbunden.

Der mittels eines Deckels 24 verschließbare Vorratsbehälter 1 ist mit der Einlaufkammer 7 des Zylinders 2 über einen Zuführkanal 25 verbunden, dem eine am Boden 26 des Vorratsbehälters 1 in diesem angeordnete Pumpe 27 vorgeordnet ist. Diese Pumpe 27 wird von einem Elektro-Motor 28 angetrieben. Bei der Pumpe 27 kann es sich um eine Zahnradpumpe handeln. Ihr ist im Bereich des Zuführkanals 25 ein Rückschlagventil 29 vorgeordnet, das einen Rückfluß von Flüssigkeit aus dem Zylinder 2 bzw. dessen Einlaufkammer 7 in den Vorratsbehälter 1 verhindert.

Des weiteren ist die Pumpe 27 mit einem Überdruckventil 30 versehen, das öffnet, wenn der Gegendruck von der Einlaufkammer 7 her einen vorgegebenen Wert überschreitet. In diesem Fall wird dann die aus dem Vorratsbehälter 1 in die Einlaufkammer 7 zu fördernde Flüssigkeit im Kurzschluß wieder in den Vorratsbehälter 1 gegeben. Solche technischen Ausführungen von Pumpen sind handelsüblich.

Die Pumpe 27 weist einen Ansaugstutzen 31 auf, dessen offenes Ende im Bereich des Bodens 26 des Vorratsbehälters 1 ist, so daß im Vorratsbehälter 1 keine Toträume entstehen.

Am Boden 26 des Vorratsbehälters 1 ist ein mittels eines Elektro-Motors 32 angetriebener Rührer 33 angeordnet, der die im Vorratsbehälter 1 befindliche Flüssigkeit ständig umwälzt.

Über eine Luftleitung 34 wird in den oberen Bereich der Einlaufkammer 7 Luft eingeführt. Um zu verhindern, daß Flüssigkeit und/oder Luft aus der Einlaufkammer 7 in die Luftleitung 34 zurückströmen kann, ist in dieser ein Rückschlagventil 35 vorgesehen, das beispielsweise durch ein sogenanntes Lippenventil gebildet sein kann. Der Luftleitung 34 wird Druckluft von einem durch einen Elektro-Motor 36 angetriebenen Kompressor 37 zugeführt, dem ein Luftfilter 38 vorgeordnet ist. Dem Kompressor ist ein Druckluftentfeuchter 39 nachgeordnet.

Weiterhin ist in der Luftleitung 34 ein Druckluftvorratsbehälter 40 angeordnet, zwischen dem und dem Kompressor 37 ein Rückschlagventil 41 angeordnet ist. Zwischen dem Kompressor 37 und dem Rückschlagventil 41 ist weiterhin ein Auslaß-Drosselventil 42 angeordnet, durch das ständig etwas Druckluft ausströmt. Wegen des Rückschlagventils 41 kann aber keine Druckluft aus dem Druckluftvorratsbehälter 40 zum Drosselventil 42 zurückströmen. Ebenfalls zwischen Kompressor 37 und Rückschlagventil 41 ist in der Luftleitung 34 ein Druckwächter 43 angeordnet, der jeweils den Kompressor 37 einschaltet, wenn ein Mindestdruck in der Luftleitung 34 zwischen Kompressor 37 und Rückschlagventil 41 unterschritten wird. Dieser Mindestdruck kann beispielsweise bei 1,7 bar liegen. Der Kompressor schaltet wieder ab, wenn der Druck einen vorgebbaren Maximaldruck von beispielsweise 2,0 bar überschreitet. Der Luftdruck kann visuell mittels eines Druckmeßgeräts 44 überwacht werden. Dem Rückschlagventil 41 ist ebenfalls noch ein Druckluft-Sterilfilter 45 vorgeordnet. Am Druckluftvorratsbehälter 40 ist ein Druckbegrenzungsventil 46 angeordnet.

In der Luftleitung 34 ist zwischen dem Druckluftvorratsbehälter 40 und dem Rückschlagventil 35 ein Drosselventil 47 und ein Magnet-Ventil 48 angeordnet. Außerdem ist zwischen dem Magnet-Ventil 48 und dem Rückschlagventil 35 ein Druckwächter 49 vorgesehen.

Zur Erzeugung der erforderlichen Kälte ist ein in üblicher Weise aus einem Verdichter 56 und einem Verflüssiger 57 bestehendes Kälteaggregat 58 vorgesehen. Vom Ausgang des Verflüssigers führt eine Leitung 59 zum Kühlmantel 5 des Zylinders 2, und zwar im Bereich von dessen Zapfventil 19. In der Leitung 59 ist ein Expansionsventil 60 zum Entspannen des im Verflüssiger 57 verflüssigten Kältemittels vorgesehen. Vom anderen Ende des Kühlmantels 5, also vom Bereich der Stauscheibe 13 führt eine Saugleitung 61 zurück zum Eingang des Verdichters 56.

Um den Verbindungskanal 22 ist eine Gefriereinrichtung 62 angeordnet. Diese besteht aus einem schraubenförmig um den Verbindungskanal 22 gewickelten Rohr 63, das einerseits mit einer Leitung 59a hinter dem Expansionsventil 60 an die Leitung 59 und andererseits mit einer Saugleitung 61a an die Saugleitung 61 angeschlossen ist. Das Rohr 63 bzw. die Gefriereinrichtung 62 ist also parallel zum Kühlmantel 5 in den Kältekreislauf des Kälteaggregats 58 geschaltet. In der Leitung 59a befindet sich ein Magnetventil 64, um die Zufuhr von Kältemittel zu der Gefriereinrichtung 62 unterbinden zu können, auch wenn dem Kühlmantel 5 Kältemittel zugeführt wird. Die Gefriereinrichtung 62 ist so ausgelegt, daß bei Beaufschlagung mit Kältemittel der Inhalt des Verbindungskanals 22 gefroren wird.

Die vorstehend beschriebene Ausführung arbeitet wie folgt:
Es wird davon ausgegangen, daß sich im Vorratsbehälter sogenannter Eismix 50, d.h. ein flüssiger Speiseeisansatz, befindet, und daß im Zylinder 2 hieraus unter gleichzeitigem Lufteinschlag Speiseeis hergestellt wird.

Der Eismix 50 wird mittels der Pumpe 27 in die Einlaufkammer 7 des Zylinders 2 gepumpt, und zwar abhängig vom Druck, der dort herrscht. Da - abgesehen von der instationären Anfahrphase - der Druck im Zylinder 2 sich nur ändert, wenn Speiseeis-Portionen mittels des Zapfventils 19 entnommen werden, wird also die Pumpe 27 immer während oder nach der Entnahme einer Speiseeis-Portion eingeschaltet.

Die zur Auflockerung des Speiseeises benötigte Luft wird über die Luftleitung 34 zugeführt. Die pro Zeiteinheit durch die Luftleitung 34 zuzuführende Luftmenge wird an dem Drosselventil 47 eingestellt. Üblicherweise kann die Einstellung so erfolgen, daß zwischen 0,8 und 2,7 l/min Luft in die Einlaufkammer gedrückt werden. Da die Leistung der Pumpe 27 pro Zeiteinheit konstant ist und beispielsweise 2,5 l/min beträgt, kann das Volumenverhältnis von Eismix und Luft, die pro Minute zugeführt werden, sehr genau auf einem vorgegebenen Wert gehalten werden.

Wenn durch Entnahme einer Speiseeis-Portion der Druck im Zylinder 2 absinkt, dann sinkt der Druck auch in der Leitung 34 zwischen dem Rückschlagventil 35 und dem Magnet-Ventil 48 ab, so daß der Druckwächter 49 diesen Druckabfall registriert. Sinkt der Druck unter einen vorgegebenen Wert von beispielsweise 1,2 bar, dann wird über eine Steuerleitung 51 ein Signal zum Öffnen des Magnet-Ventils 48 und über eine Steuerleitung 52 ein Signal zum Einschalten des Motors 28 und der Pumpe 27 gegeben. Es werden dann also gleichzeitig im vorgegebenen Mengenverhältnis Luft und Eismix in die Einlaufkammer 7 des Zylinders 2 gefördert. Wenn der Druck im Zylinder 2 wieder einen vorgegebenen Höchstwert von beispielsweise 1,5 bar erreicht hat, werden über entsprechende Signale vom Druckwächter 49 das Magnet-Ventil 48 geschlossen und der Motor 28 der Pumpe 27 abgeschaltet. Dieser Vorgang wiederholt sich ständig, wenn Speiseeis-Portionen aus dem Zapfventil 19 entnommen werden.

Der Vorratsbehälter 1 ist drucklos; der darin gelagerte Eismix wird bei einer Lagertemperatur von ca. 2°C kühlgehalten und periodisch vom Rührer 33 umgewälzt, um eine gleichmäßige Temperatur innerhalb des Eismixes sicherzustellen.

Während dieses gesamten Vorganges wird einerseits der Kühlmantel 5 und andererseits die Gefriereinrichtung 62 mit Kältemittel vom Kälteaggregat 58 her versorgt, d.h. das Magnetventil 64 ist geöffnet. Das im Verbindungskanal 22 befindliche Eismix ist gefroren, so daß in diesem Bereich keine Verbindung zwischen der Kühl- und/oder Gefrier-Kammer 15 und dem Vorratsbehälter 1 besteht.

Wie sich aus dem Vorstehenden ergibt, ist der Zylinder 2 immer mit Eismix bzw. fertigem Speiseeis gefüllt, unabhängig davon, ob im Vorratsbehälter 1 wenig oder viel Eismix 50 vorhanden ist. Wenn - üblicherweise nach dem täglichen Betriebsschluß - der noch im Vorratsbehälter 1 vorhandene Eismix 50 und das im Zylinder 2 vorhandene Speiseeis pasteurisiert werden sollen, wird die Druckluftzufuhr durch generelles Schließen des Magnet-Ventils 48 unterbunden. Gleichzeitig werden das Rühr- und Schabewerk 9 und die Pumpe 27 in Betrieb gesetzt. Außerdem werden die Kühlung über das Kühlrohr 4 und den Kühlmantel 5 und die Gefriereinrichtung 62 abgeschaltet und die Heizung durch den Heizmantel 6 eingeschaltet. Durch die Wärmeübertragung wird der Eisvorrat im Zylinder 2 geschmolzen und der Eismix 50 weiter erwärmt. Die Wärme fließt auch in den mit dem Zylinder 2 fest verbundenen Verbindungskanal 22 und schmilzt den an dessen Innenwand festgefrorenen Eismix ab. Aufgrund des Druckes, der von der Kammer 15 aus auf den abgeschmolzenen Eispfropfen im Verbindungskanal 22 wirkt, wird dieser abgeschmolzene Pfropfen in den Vorratsbehälter 1 gedrückt. Während des Pasteurisiervorganges wird der Heizmantel 6 über einen die Temperatur der Innenwand des Zylinders 2 erfassenden Thermostaten 53 geregelt. Der Eismix wird mittels der Rührwendel 16 in Richtung Zapfventil gefördert und von dort mittels der Schnecke 18, die während des Betriebes zum Ausdrücken der Speiseeis-Portionen durch das Zapfventil 19 dient, durch den geöffneten Verbindungskanal 22 in den Vorratsbehälter 1 zurückgefördert. Von hier wird der Eismix mittels der Pumpe 27 wieder in die Einlaufkammer 7 zurückgefördert. Es wird also ein ständiger Kreislauf des Eismixes zwischen Vorratsbehälter 1 und Zylinder 2 erreicht, wobei alle Wandbereiche des Zylinders 2 bestrichen werden. Da der Eismix mittels des Rühr- und Schabewerks 9 und insbesondere mittels der Schabeklingen 17 im Zylinder stark verwirbelt wird, erfolgt eine gute Wärmeübertragung von der mittels des Heizmantels 6 beheizten Fläche des Zylinders 2 auf den Eismix. Wenn der Eismix zum Pasteurisieren auf etwa 72°C erhitzt werden soll, ist es daher ausreichend, wenn die Temperatur der Innenwand des Zylinders 2 mittels des Thermostaten 53 auf einer Temperatur von 75 bis 80°C gehalten wird. Damit ist sichergestellt, daß der Eismix nicht an der Innenwand des Zylinders 2 anbrennt und somit keinen karamelartigen Geschmack annimmt. Sobald der gesamte Eismix 50 die Pasteurisierungstemperatur erreicht hat, was über einen im Vorratsbehälter 1 angebrachten Thermostaten 54 erfaßt wird, wird der Heizmantel 6 abgeschaltet, wobei diese Abschaltung - gesteuert über eine nichtdargestellte Zeituhr - verzögert erfolgen kann, um eine wirksame Keimabtötung im Eismix 50 sicherzustellen.

Anschließend wird die in der Zeichnung nichtdargestellte Kälteanlage wieder eingeschaltet und der Eismix 50 über das Kühlrohr 4 und den Kühlmantel 5 auf Lagertemperatur von 2°C heruntergekühlt. Das Erreichen dieser Temperatur wird über einen im Vorratsbehälter 1 angebrachten Thermostaten 55 überwacht.Während des Herunterkühlens des Eismixes 50 auf die Lagertemperatur und während der Lagerung ist das Magnetventil 64 geschlossen, so daß die Gefriereinrichtung 62 nicht mit Kältemittel beaufschlagt wird. Während des Herunterkühlens des gesamten Eismixes nach dem Pasteurisieren und während des normalen Lagerbetriebes wird also der Verbindungskanal 22 nicht durch einen Eispfropfen verschlossen. Erst wenn der normale Zapfbetrieb eingeschaltet wird, wird das Magnetventil 64 geöffnet, was zur Folge hat, daß der Verbindungskanal 22 durch einen Eismix-Pfropfen verschlossen wird.

Es ist möglich, zum Pasteurisieren die Drehzahl der Pumpe 27 zu verdoppeln, um den Mixumlauf zu vergrößern. Die Menge, die pro Zeiteinheit zwischen Zylinder 2 und Vorratsbehälter 1 umgewälzt wird, wird ausschließlich durch die Leistung der Pumpe 27 bestimmt.

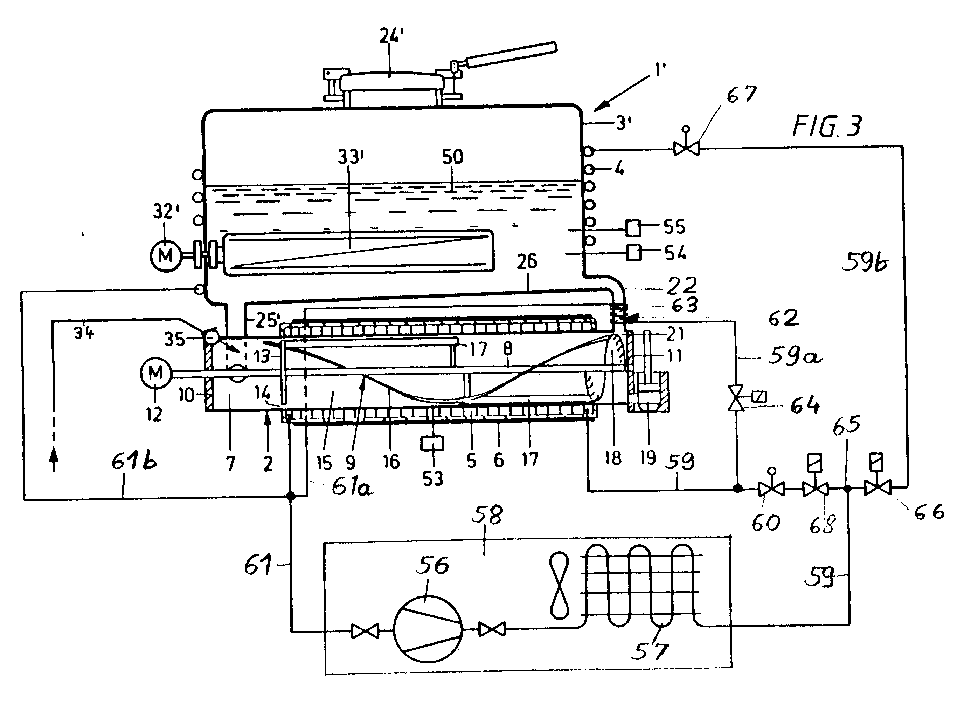

Bei der Ausführungsform nach Fig. 3 sind mit dem Ausführungsbeispiel nach Fig. 1 und 2 gleiche Teile mit der jeweils selben Bezugsziffer versehen Konstruktiv andere, aber funktionell im Prinzip gleiche Teile sind mit der jeweils gleichen Bezugsziffer mit einem hochgesetzten ′ versehen. Insoweit wird von einer detaillierten Beschreibung Abstand genommen.

Die Vorrichtung nach Fig. 3 weist einen druckfesten Vorratsbehälter 1′ auf, der durch einen druckfesten, luftdicht schließenden Deckel 24′ verschlossen ist.

Im Vorratsbehälter 1′ ist ein walzenförmiger Rührer 33′ angeordnet, der von einem Elektro-Motor 32′ antreibbar ist.

Aus dem Vorratsbehälter 1′ mündet ein Zuführkanal 25′ in die Einlaufkammer 7 des Zylinders 2, wobei dieser Zuführkanal 25′ durch einen Rohrkrümmer verhältnismäßig großen Querschnitts gebildet wird, der etwa in Höhe der Welle 8 des Rühr- und Schabewerks 9 in die Einlaufkammer mündet. Durch diesen Zuführkanal 25′ kann die über die Luftleitung 34 zugeführte Druckluft auch in den Vorratsbehälter 1′ aufsteigen, weshalb dieser luftdicht und druckfest ausgebildet sein muß. Die Druckluftzuführung kann in konventioneller Weise erfolgen, wie dies beispielsweise in der DE-PS 12 77 877 (entsprechend US-PS 3 402 567) dargestellt und beschrieben ist, worauf es hier nicht ankommt.

Die Umwälzung des Eismixes beim Pasteurisieren erfolgt ausschließlich mittels des Rühr- und Schabewerks 9 einschließlich der Schnecke 18.

Zum Pasteurisieren wird also das Magnetventil 64 geschlossen, so daß die Gefriereinrichtung 62 nicht mit Kältemittel beaufschlagt wird. Es kann also in der angesprochenen Weise die Umwälzung des Eismixes erfolgen. Der Rücklauf erfolgt frei durch den Zuführkanal 25′. Die Temperatursteuerung und die Beendigung des Pasteurisierungsvorgangs erfolgt wie beim vorherigen Ausführungsbeispiel.

Fig. 3 zeigt auch den Anschluß des Kühlrohrs 4 am Vorratsbehälter 1′ an das Kälteaggregat 58. Der entsprechende Anschluß kann bei der Ausführungsform nach den Fig. 1 und 2 identisch sein. Er ist dort lediglich aus Platzgründen nicht dargestellt Hierbei zweigt aus der Leitung 59 zur Zuführung des im Verflüssiger 57 verflüssigten Kältemittels zu den einzelnen Kühleinrichtungen noch eine Leitung 59b ab, die zum Kühlrohr 4 des Vorratsbehälters 1′ führt. Von diesem Kühlrohr 4 führt eine Saugleitung 61b zurück zur Saugleitung 61. Um auch die Kühlung des Vorratsbehälters 1′ getrennt schalten zu können, ist in der Leitung 59b hinter deren Abzweigung 65 aus der Leitung 59 ein Magnetventil 66 angeordnet, durch das die Zufuhr von verflüssigten Kältemittel zur Leitung 59b abgesperrt werden kann. Hinter dem Magnetventil 66 ist noch ein eigenes Expansionsventil 67 für die Kühlung des Vorratsbehälters 1′ vorgesehen. Hinter der Abzweigung 65 und vor dem Expansionsventil 60 ist noch ein weiteres Magnetventil 68 in der Leitung 59 vorgesehen, mit dem auch die Zufuhr von Kältemittel zum Kühlmantel 5 und zur Gefriereinrichtung 62 gesperrt werden kann.

Anstelle von Eismix können auch andere Ansätze, beispielsweise für Milchshake-Getränke, Sorbet oder gefrorene Süßspeisen eingesetzt werden, soweit diese Ansätze pumpfähig, also flüssig sind.

## Patentansprüche

1. Vorrichtung zum Herstellen von Speiseeis, Milchshake, Sorbet, gefrorenen Süßspeisen o. dgl. jeweils aus einem pumpfähigen Ansatz, bestehend aus einem Vorratsbehälter (1,1′) für den Ansatz und einem mit diesem über einen Zuführkanal (25,25′) verbundenen Kühl- oder Gefrier-Zylinder (2), in dem ein drehantreibbares Rühr- und Schabewerk (9) angeordnet ist, wobei der Zuführkanal (25,25′) in eine an einem Ende des Zylinders (2) befindliche Einlaufkammer (7) einmündet, wobei am anderen Ende des Zylinders (2) ein Zapfventil (19) vorgesehen ist, wobei nur der Zylinder (2) mit einer Heizung (Heizmantel 6) zum Pasteurisieren des Ansatzes versehen ist, wobei ein Thermostat (53) zur Begrenzung der Wandtemperatur des Zylinders (2) vorgesehen ist, wobei Einrichtungen zum Transport des Ansatzes von der Einlaufkammer (7) zum Zapfventil (19) vorgesehen sind, und wobei zwischen Vorratsbehälter (1,1′) und Zylinder (2) ein absperrbarer Verbindungskanal (22) vorgesehen ist, der aus dem dem Zapfventil (19) benachbarten Endbereich (21) des Zylinders (2) ausmündet, dadurch gekennzeichnet, daß zum Absperren des Verbindungskanals (22) an diesem eine Gefriereinrichtung (62) angeordnet ist.

2. Vorrichtung nach Anspruch 1, dadurch gekennzeichnet, daß die Gefriereinrichtung (62) ein den Verbindungskanal (22) zumindest teilweise umgebendes, mit Kältemittel von einem Kälteaggregat (58) beaufschlagbares Rohr (63) aufweist.

3. Vorrichtung nach Anspruch 1, dadurch gekennzeichnet, daß die Gefriereinrichtung (62) an ein zum Kühlen des Kühl- oder Gefrier-Zylinders (2) dienendes Kälteaggregat (58) angeschlossen ist.

4. Vorrichtung nach Anspruch 1, dadurch gekennzeichnet, daß die Gefriereinrichtung (62) über Leitungen (59, 59a, 61, 61a) mit einem Kälteaggregat (58) verbunden ist und daß in mindestens einer Leitung (59a) ein Ventil angeordnet ist.

## Claims

1. Apparatus for the preparation of ice cream, milk-shakes, sorbets, frozen desserts, and the like, in each case from a pumpable starting mixture, comprising a storage container (1, 1′) for the starting mixture and a cooling or freezing cylinder (2) communicating with the storage container via a supply conduit (25, 25′), in which cylinder a rotatably drivable stirring and scraping mechanism (9) is disposed, the supply conduit (25, 25′) discharging into an inlet chamber (7) located on one end of the cylinder (2), a discharge valve (19) being located on the other end of the cylinder (2), only the cylinder (2) being provided with a heater (heating jacket 6) for pasteurizing the starting mixture, a thermostat (53) being provided for limiting the wall temperature of the cylinder (2), and means being provided for transporting the starting mixture from the inlet chamber (7) to the discharge valve (19), and a connecting conduit (22), which can be blocked and which discharges from the end region (21) of the cylinder (2) adjacent the discharge valve (19), being provided between the storage container (1, 1′) and the cylinder (2), characterized in that a freezing device (62) is arranged on the connecting conduit (22) to block it.

2. Apparatus according to claim 1, characterized in that the freezing device (62) has a tube (63), which at least partially surrounds the connecting conduit (22) and which can be acted upon by a coolant from a cooling aggregate (58).

3. Apparatus according to claim 1, characterized in that the freezing device (62) is connected to a cooling aggregate (58) serving to cool the cooling or freezing cylinder (2).

4. Apparatus according to claim 1, characterized in that the freezing device (62) is connected with a cooling aggregate (58) via lines (59, 59a, 61, 61a) and in that a valve is arranged in at least one line (59a).

## Revendications

1. Dispositif pour fabriquer des crèmes glacées, des milk-shakes, des sorbets, des desserts glacés ou analogue à partir d'une préparation à pomper, composé d'un réservoir (1, 1′) pour la préparation et d'un cylindre réfrigérant ou congélateur (2) rattaché à celui-ci par un conduit d'amenée (25, 25′) et dans lequel est arrangé un mélangeur et grattoir rotateur (9), le conduit d'amenée (25, 25′) aboutant dans une chambre d'entrée (7) située sur un bout du cylindre (2), une soupape de prise (19) étant prévue sur l'autre bout du cylindre (2), seulement le cylindre (2) étant prévu avec un chauffage (manteau de chaufface 6) pour pasteuriser la préparation, un thermostat (53) étant prévu pour la limitation de la température de la paroi du cylindre (2), des dispositifs étant prévus pour le transport de la préparation de la chambre d'entrée (7) à la soupape de prise (19), et un conduit de raccordement (22) à barrer étant prévu entre le réservoir (1, 1′) et le cylindre (2) et ouvrant de la zone terminale (21) voisine à la soupape de prise (19), caractérisé en ce qu'un dispositif congélateur est arrangé sur le conduit de raccordement (22) pour le barrage de celui-ci.

2. Dispositif selon la revendication 1, charactérisé en ce que le dispositif congélateur (62) présente un tuyau (63), qui entoure du moins en partie le conduit de raccordement (22) et qui peut être traité par un agent frigorifique d'un agrégat frigorifique (58).

3. Dispositif selon la revendication 1, caractérisé en ce que le dispositif congélateur (62) est rattaché à un agrégat frigorifique (58), qui sert à réfrigérer le cylindre réfrigérant ou congélateur (2).

4. Dispositif selon la revendication 1, caractérisé en ce que le dispositif congélateur (62) est raccordé avec un agrégat frigorifique par des lignes (59, 59a, 61, 61a) et en ce qu'une soupape est arrangée du moins dans une ligne (59a).
